# DEMANDE DE BREVET EUROPEEN

(11) **EP 1 508 982 A1**
(43) Date de publication de la demande: **23.02.2005**
(21) Numéro de dépôt: 04292032.2
(22) Date de dépôt: 11.08.2004
(51) Int. Cl.: H04B 10/08

(54) **Contrôle dynamique de perte de puissance dans une fibre optique par contrapropagation d'un canal de supervision**

(30) Priorité: 19.08.2003 FR 0309998
(71) Demandeur: ALCATEL, 75008 Paris (FR)
(72) Inventeur: Bisson, Arnaud Résidence d'Orsay, 91400 Orsay (FR); Rossi, Emmanuel, 75014 Paris (FR); Balland, Guy, 91700 Ste Geneviève des Bois (FR)
(74) Mandataire: Fournier, Michel Robert Marie

(57) **Abrégé**

Un dispositif optique est dédié à la mesure dynamique de perte de puissance dans une fibre optique (FO) comportant des première (E1) et seconde (E2) extrémités permettant respectivement de recevoir et de délivrer des signaux optiques primaires. Le dispositif comprend des moyens d'injection (3), chargés d'injecter des signaux de supervision dans la fibre optique (FO) au niveau de sa seconde extrémité (E2), sous une puissance optique choisie, et des moyens de détection (5) chargés d'extraire les signaux de supervision au niveau de la première extrémité (E1) de la fibre optique (FO) afin de déterminer leur puissance optique et déduire de cette puissance et de la puissance optique choisie des informations primaires représentatives de la perte de puissance optique des signaux de supervision dans la fibre optique (FO), ainsi qu'éventuellement de comparer les informations primaires à une valeur représentative de la perte de puissance optique nominale dans la fibre optique (FO), de manière à délivrer des informations secondaires représentatives d'une variation de perte de puissance dans la fibre optique.

## Description

L'invention concerne les dispositifs optiques, et plus particulièrement les dispositifs dédiés à la mesure et/ou au contrôle de la perte de puissance dans une ligne de transmission de signaux optiques.

Comme le sait l'homme de l'art, les lignes de transmission optique introduisent des pertes de puissance optique qui nuisent aux performances de transmission et peuvent entraîner des erreurs de traitement, voire même des pertes de données. Ces pertes de puissance optique sont généralement liées au vieillissement des composants (fibres optiques, amplificateurs, etc) qui constituent les lignes de transmission, et/ou aux interventions de maintenance ou de réparation.

Afin de suivre l'évolution des pertes de puissance dans les lignes de transmission supervisées, il a été proposé d'utiliser le canal de supervision, dédié au transport d'informations binaires de gestion du réseau. Plus précisément, il a été proposé de mesurer la puissance des signaux optiques dits « primaires », représentatifs des données à transmettre (ou « payload »), qui parviennent à la sortie de la fibre optique de transmission, puis d'intégrer dans les signaux de supervision des informations représentatives de cette puissance de sortie, et d'acheminer le canal de supervision en amont de la fibre optique contenant les signaux primaires à l'aide d'une autre fibre optique, afin de comparer la puissance de sortie à la puissance d'entrée précédemment déterminée.

Une telle solution n'est pas satisfaisante car l'intégration dans les signaux de supervision des informations représentatives de la puissance de sortie nécessite au moins une conversion analogique numérique préalable. En outre, le temps nécessaire à la conversion et à l'acheminement des informations de puissance est alors inadapté à une procédure d'ajustement dynamique de la puissance optique.

L'invention a donc pour but de remédier aux inconvénients précités.

Elle propose à cet effet un nouveau dispositif optique dédié à la mesure dynamique de la perte de puissance dans une ligne de transmission optique comprenant au moins une fibre optique comportant des première et seconde extrémités disposées respectivement pour recevoir d'un module d'émission et pour délivrer à un module de réception des signaux optiques primaires.

Ce dispositif se caractérise par le fait qu'il comprend des moyens d'injection capables d'injecter des signaux de supervision dans la fibre optique au niveau de sa seconde extrémité, sous une puissance optique choisie, et des moyens de détection chargés d'extraire ces signaux de supervision au niveau de la première extrémité de la fibre afin de déterminer leur puissance optique et de déduire de cette puissance et de la puissance optique choisie des informations primaires représentatives de la perte de puissance optique des signaux de supervision dans la fibre.

Selon une autre caractéristique de l'invention, les moyens de détection sont capables de comparer les informations primaires à une valeur représentative d'une perte de puissance nominale dans la fibre, de manière à délivrer des informations secondaires représentatives d'une variation de perte de puissance dans ladite fibre optique. On peut ainsi suivre de façon dynamique l'évolution des pertes de puissance effectivement introduites par la fibre optique.

Selon les besoins, les moyens de détection peuvent délivrer des informations secondaires soit représentatives de l'amplitude de l'écart entre les informations primaires et la valeur choisie, soit à trois états, un premier état étant associé à un écart positif, supérieur à un premier seuil, entre les informations primaires et la valeur choisie, un deuxième état étant associé à un écart négatif, inférieur à un second seuil, entre les informations primaires et la valeur choisie, et un troisième état étant associé à un écart compris entre les premier et second seuils.

Selon encore une autre caractéristique de l'invention, le dispositif peut comporter des moyens de contrôle couplés aux moyens de détection et à la première extrémité de la fibre, et chargés, lorsque les moyens de détection détectent une variation de perte de puissance des signaux de supervision dans la fibre, de modifier la puissance des signaux primaires injectés dans la fibre par sa première extrémité, en fonction de la variation de perte de puissance détectée.

Ainsi, en cas de variation (le plus souvent une augmentation) de perte de puissance des signaux de supervision dans la fibre, le dispositif peut effectuer un ajustement dynamique de la puissance d'entrée des signaux primaires de manière à la maintenir sensiblement constante par rapport à une valeur nominale de sortie.

Pour assurer cet ajustement, les moyens de contrôle peuvent par exemple comprendre un atténuateur optique variable (ou « VOA ») couplé à la première extrémité de la fibre, en aval des moyens de détection. Ce VOA atténuant la puissance des signaux primaires injectés dans la fibre, les moyens de comparaison peuvent leur demander i) de réduire le niveau de leur atténuation de puissance lorsque les informations secondaires sont dans leur premier état, ou ii) d'augmenter le niveau de leur atténuation de puissance lorsque les informations secondaires sont dans leur deuxième état, ou encore iii) de maintenir constant le niveau de leur atténuation de puissance lorsque les informations secondaires sont dans leur troisième état.

Par ailleurs, les moyens de détection peuvent comprendre un filtre optique chargé d'extraire les signaux de supervision, un circuit électronique couplé au filtre et chargé de délivrer les informations primaires, ainsi qu'éventuellement des moyens de comparaison chargés de comparer les informations primaires à la valeur représentative de la perte de puissance nominale, de manière à délivrer les informations secondaires.

Le dispositif peut également comporter, d'une part, des moyens de mesure de puissance chargés de délivrer des mesures représentatives de la puissance des signaux de supervision délivrés par les moyens de supervision, et d'autre part, des moyens d'injection auxiliaire chargés d'appliquer des signaux auxiliaires aux signaux de supervision en aval de la seconde extrémité (avant injection) lorsque les signaux primaires présentent au niveau de cette seconde extrémité une puissance optique dont la valeur est incluse dans un intervalle choisi. Dans ce cas, les moyens de détection comprennent avantageusement des moyens de détection de signaux auxiliaires chargés, lorsqu'ils détectent des signaux auxiliaires, d'autoriser les moyens de contrôle à fonctionner compte tenu des informations secondaires.

En variante, le dispositif peut comprendre, d'une part, des moyens d'injection auxiliaire chargés d'appliquer des signaux auxiliaires aux signaux de supervision en aval de la seconde extrémité, et d'autre part, des moyens de contrôle chargés de contrôler l'amplitude relative des signaux auxiliaires délivrés par les moyens d'injection auxiliaire de sorte i) que cette amplitude relative présente une valeur inversement proportionnelle à la puissance des signaux de supervision délivrés par les moyens de supervision, et ii) que les signaux auxiliaires présentent une amplitude absolue sensiblement constante et indépendante de la puissance des signaux de supervision. Dans ce cas, les moyens de détection comprennent avantageusement des moyens de mesure chargés de délivrer des mesures représentatives de l'amplitude des signaux auxiliaires appliqués aux signaux de supervision (et constituant les informations primaires).

Par exemple, les moyens d'injection auxiliaire sont agencés de manière à délivrer des signaux auxiliaires destinés à moduler en amplitude les signaux de supervision.

Les moyens de supervision peuvent également comprendre des moyens d'asservissement chargés d'asservir la puissance des signaux de supervision avant qu'ils ne soient injectés dans la fibre optique au niveau de sa seconde extrémité.

L'invention propose également un procédé dédié à la mesure dynamique de la perte de puissance dans une ligne de transmission optique comprenant au moins une fibre optique comportant des première et seconde extrémités disposées respectivement pour recevoir d'un module d'émission et pour délivrer à un module de réception des signaux optiques primaires.

Ce procédé se caractérise par le fait qu'il consiste à injecter des signaux de supervision dans la fibre, par sa seconde extrémité, sous une puissance optique choisie, puis à extraire les signaux de supervision au niveau de la première extrémité de la fibre pour déterminer leur puissance optique et déduire de cette puissance et de la puissance optique choisie des informations primaires représentatives de la perte de puissance optique des signaux de supervision dans la fibre.

Selon une autre caractéristique du procédé, on compare les informations primaires à une valeur représentative d'une perte de puissance nominale dans la fibre, afin de délivrer des informations secondaires représentatives d'une variation de perte de puissance dans la fibre optique.

Dans ce cas, les informations secondaires délivrées sont préférentiellement représentatives de l'écart entre les informations primaires et la valeur choisie (nominale). Par exemple, les informations secondaires sont représentatives de l'amplitude de l'écart, ou bien elles sont à trois états, comme indiqué ci-avant.

Selon encore une autre caractéristique du procédé, en cas de détection d'une variation de perte de puissance des signaux de supervision, on peut modifier la puissance des signaux primaires injectés dans la fibre par sa première extrémité, en fonction de la variation détectée.

Par ailleurs, d'une première part, lorsque les informations secondaires sont dans leur premier état on peut réduire le niveau d'atténuation de puissance des signaux primaires, d'une deuxième part, lorsque les informations secondaires sont dans leur deuxième état on peut augmenter le niveau d'atténuation de puissance des signaux primaires, et d'une troisième part, lorsque les informations secondaires sont dans leur troisième état on peut maintenir constant le niveau d'atténuation de puissance des signaux primaires.

On peut également mesurer la puissance des signaux de supervision en aval de la seconde extrémité, et appliquer des signaux auxiliaires aux signaux de supervision en aval de la seconde extrémité lorsque les signaux primaires présentent au niveau de cette seconde extrémité une puissance optique dont la valeur est incluse dans un intervalle choisi. Dans ce cas, lorsque l'on détecte des signaux auxiliaires en amont de la première extrémité, on peut autoriser une éventuelle modification de la puissance des signaux primaires, injectés dans la fibre optique par sa première extrémité, en fonction des informations secondaires.

En variante, on peut appliquer des signaux auxiliaires aux signaux de supervision en aval de la seconde extrémité, en contrôlant leur amplitude relative de sorte i) qu'elle présente une valeur inversement proportionnelle à la puissance des signaux de supervision injectés au niveau de la seconde extrémité, et ii) que les signaux auxiliaires présentent une amplitude absolue sensiblement constante et indépendante de la puissance des signaux de supervision. Dans ce cas, on peut mesurer en amont de la première extrémité de la fibre optique l'amplitude des signaux auxiliaires appliqués aux signaux de supervision (ces mesures constituant les informations primaires).

On peut également asservir la puissance des signaux de supervision avant de les injecter dans la fibre optique au niveau de sa seconde extrémité.

Le dispositif et le procédé selon l'invention sont tout particulièrement adaptés, bien que de façon non exclusive, à la mesure et/ou au contrôle dynamique des pertes de puissance sur les lignes de transmission optique utilisées dans le domaine des télécommunications, notamment lorsque lesdites lignes transportent des canaux de données multiplexés en longueur d'onde (ou (D)WDM pour « (Dense) Wavelength-Division Multiplexing) »).

D'autres caractéristiques et avantages de l'invention apparaîtront à l'examen de la description détaillée ci-après, et des dessins annexés, sur lesquels :
- la figure 1 illustre de façon schématique un premier exemple de réalisation d'un dispositif optique selon l'invention,
- la figure 2 illustre de façon schématique un deuxième exemple de réalisation d'un dispositif optique selon l'invention,
- la figure 3 illustre de façon schématique un troisième exemple de réalisation d'un dispositif optique selon l'invention, et
- la figure 4 illustre de façon schématique un quatrième exemple de réalisation d'un dispositif optique selon l'invention.

Les dessins annexés pourront non seulement servir à compléter l'invention, mais aussi contribuer à sa définition, le cas échéant.

L'invention est destinée à permettre la mesure et/ou le contrôle de la perte de puissance dans une ligne de transmission de signaux optiques.

Dans ce qui suit, on considère que la ligne de transmission est dédiée au transport de canaux multiplexés en longueur d'onde.

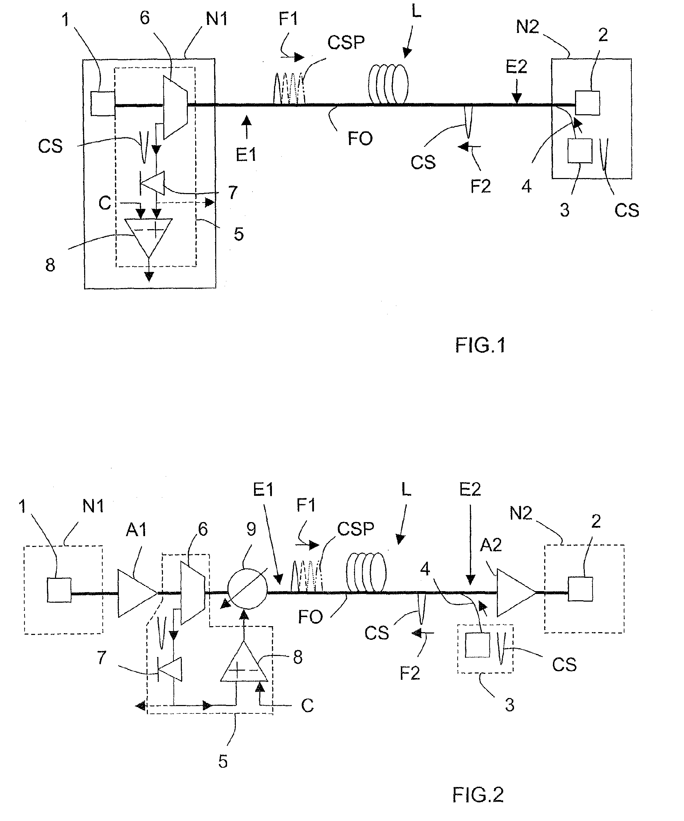

On se réfère tout d'abord à la figure 1 pour décrire un premier exemple de réalisation d'un dispositif optique selon l'invention, implanté sur une ligne de transmission optique L établie entre deux noeuds N1 et N2 d'un réseau de télécommunications de type WDM ou DWDM. Les noeuds sont des équipements de réseau, comme par exemple des routeurs ou des commutateurs, ou bien des amplificateurs ou des régénérateurs.

Cette ligne L est ici constituée d'une fibre optique FO, utilisée de façon bidirectionnelle, et comportant une première extrémité E1 raccordée au premier noeud N1 et une seconde extrémité E2, opposée, raccordée au second noeud N2. Bien qu'étant bidirectionnelle, la fibre optique FO est dédiée à la transmission de signaux optiques primaires, représentatifs de données à transmettre, par exemple sous la forme de canaux (ou agrégats) CSP multiplexés en longueurs d'onde (ou agrégats WDM), du premier noeud N1, et plus précisément de son module d'émission 1, vers le second noeud N2, et plus précisément son module de réception 2 (flèche F1).

Bien entendu, la ligne de transmission peut comporter plusieurs fibres optiques, notamment pour la transmission de signaux primaires du second noeud N2 vers le premier noeud N1.

Cette fibre optique FO présente une perte de puissance nominale connue.

Le dispositif selon l'invention comporte tout d'abord un module de supervision 3 raccordé à la seconde extrémité E2 de la fibre FO par l'intermédiaire d'un dispositif d'insertion 4, comme par exemple un coupleur optique de type 2x1, ou un filtre optique. Ici, le module de supervision 3 est implanté dans le second noeud N2, mais dans une variante il pourrait être externe à ce noeud. Ce module de supervision 3 est chargé de délivrer dans la fibre FO, au niveau de sa seconde extrémité E2, un canal de supervision CS, présentant une longueur d'onde spécifique et contenant des signaux de supervision représentatifs d'informations binaires de gestion du réseau. La puissance optique (choisie) de ce canal CS doit être la plus constante possible. En effet, les éventuelles variations de puissance du canal de supervision CS limitent la fiabilité du système. Il est possible d'en asservir la puissance afin de rendre plus précise la mesure des pertes au sein de la ligne de transmission L. Pour ce faire, on peut par exemple utiliser un module d'asservissement couplé à un module d'émission de signaux de supervision 11 du module de supervision 3.

Selon l'invention, le canal de supervision CS circule dans la fibre FO (flèche F2) à contre courant des canaux multiplexés CSP contenant les signaux primaires (flèche F1). Ce canal de supervision CS est réceptionné au niveau de la première extrémité E1 de la fibre FO par un module de détection 5 du dispositif optique selon l'invention.

Ici, le module de détection 5 est implanté dans le premier noeud N1, mais dans une variante il pourrait être externe à ce noeud. Ce module de détection 5 est chargé d'extraire de la fibre FO les signaux de supervision pour en déduire, notamment, des informations primaires représentatives de leur puissance optique de sortie.

A cet effet, le module de détection 5 comporte par exemple un démultiplexeur 6 destiné à n'extraire de la fibre FO que le canal de supervision CS pour délivrer les signaux de supervision qu'il contient à un circuit électronique 7, de préférence à photodiode, non seulement utilisé pour détecter les informations binaires de supervision, mais également destiné à mesurer leur puissance moyenne de sortie. Ce circuit électronique 7 connaissant la puissance nominale des signaux de supervision générés par le module de supervision 3 ainsi que les pertes d'insertion et d'extraction du canal de supervision CS (déterminées par calibration), il peut donc en déduire la perte de puissance réellement introduite par la fibre FO. Il délivre par conséquent des informations primaires qui sont non seulement représentatives de la puissance moyenne des signaux de supervision, mais également de la perte de puissance réellement introduite par la fibre FO.

Le module de détection 5 peut être également chargé, comme illustré, de comparer les informations primaires, délivrées par le circuit électronique 7, à une valeur C représentative de la perte de puissance optique nominale dans la fibre FO, de manière à délivrer des informations secondaires représentatives d'une variation de perte de puissance des signaux de supervision dans ladite fibre FO. Cela permet en effet de suivre de façon dynamique l'évolution des pertes de puissance.

A cet effet, le module de détection 5 peut par exemple comprendre un comparateur 8 couplé à la sortie du circuit électronique 7 et chargé de comparer les informations primaires qu'il délivre à une consigne C représentative de la perte de puissance optique nominale des signaux de supervision dans la fibre FO.

Préférentiellement, les informations primaires et la consigne C alimentent respectivement des entrées non-inverseuse (+) et inverseuse (-) du comparateur 8. La consigne C permet donc au comparateur 8 d'estimer la différence (ou l'écart) entre la perte nominale de la fibre FO et la perte réellement introduite par cette fibre.

Le comparateur 8 reçoit donc les informations primaires, les compare à la consigne C et délivre des informations secondaires représentatives de l'écart entre les informations primaires et C, ou en d'autres termes représentatives d'une variation de la perte de puissance dans la fibre FO par rapport à une valeur nominale choisie. Ces informations secondaires peuvent être soit directement représentatives de l'amplitude de l'écart mesuré, soit à trois états, un premier état étant associé à un écart positif supérieur à un premier seuil S1 entre les informations primaires et la valeur nominale choisie, un deuxième état étant associé à un écart négatif inférieur à un second seuil S2 entre les informations primaires et la valeur nominale choisie, et un troisième état étant associé à un écart compris entre les premier S1 et second S2 seuils.

Dans ce premier mode de réalisation, le dispositif selon l'invention est donc constitué d'un module de supervision 3, associé à un dispositif d'insertion 4, et d'un module de détection 5, placés aux deux extrémités E1 et E2 de la fibre optique FO.

Dans un second mode de réalisation, illustré sur la figure 2, le dispositif selon l'invention assure en outre l'ajustement de la puissance des signaux primaires au niveau de la première extrémité E1 de la fibre FO.

Il comprend à cet effet un module de contrôle 9 chargé de modifier la puissance des signaux primaires avant qu'ils ne soient introduits dans la première extrémité E1 de la fibre FO. Ce module de contrôle 9 comprend, par exemple, un atténuateur optique variable, plus connu sous l'acronyme anglais VOA (pour « Variable Optical Attenuator »).

Dans cet exemple de réalisation, le dispositif de détection 5 n'est plus placé à l'intérieur du premier noeud N1. Il est désormais placé à la sortie de ce premier noeud N1, intercalé entre un premier amplificateur A1 et le module de contrôle 9. Par ailleurs, le module de supervision 3 n'est plus placé à l'intérieur du second noeud N2. Il est désormais placé au niveau de la seconde extrémité E2 de la fibre FO, juste avant un second amplificateur A2 installé à l'entrée du second noeud N2.

En raison de cet agencement, les signaux de supervision qui sont prélevés par le démultiplexeur 6, du module de détection 5, font préalablement l'objet d'une atténuation par le VOA 9 (module de contrôle). Par conséquent, en cas de détection d'une variation (généralement une augmentation) de la perte de puissance dans la fibre FO, le VOA 9 réduit l'atténuation (ou compense l'augmentation de perte dans la fibre), ce qui équivaut à amplifier les signaux primaires (modulés) au niveau de la première extrémité E1 afin qu'ils puissent présenter au niveau de la seconde extrémité E2, après avoir circulé dans la fibre optique FO, une puissance de sortie nominale.

Ainsi, lorsque le comparateur 8 délivre au module de contrôle 9 (VOA) des informations secondaires placées, par exemple, dans le premier état, ce dernier réduit l'atténuation d'une valeur choisie, par exemple égale à environ 1 dB. En revanche, lorsque le comparateur 8 délivre au module de contrôle 9 (VOA) des informations secondaires placées dans le deuxième état, ce dernier augmente l'atténuation d'une valeur choisie, par exemple égale à environ 1 dB. Et lorsque le comparateur 8 délivre au module de contrôle 9 (VOA) des informations secondaires placées dans le troisième état, ce dernier maintient son niveau d'atténuation.

En variante, lorsque les informations secondaires représentent l'amplitude de l'écart entre la perte nominale de la fibre (C) et sa perte réelle, le module de contrôle 9 (VOA) réduit l'atténuation d'une valeur sensiblement égale à l'écart. Ainsi, seule une variation de perte de puissance introduite par la fibre FO entraîne un ajustement automatique de l'atténuation.

Le dispositif selon l'invention est ici constitué, d'une part, d'un module de supervision 3 placé au niveau de la seconde extrémité E2 de la fibre optique FO, et d'autre part, d'un module de détection 5 et d'un module de contrôle 9 placés au niveau de la première extrémité E1 de ladite fibre optique FO.

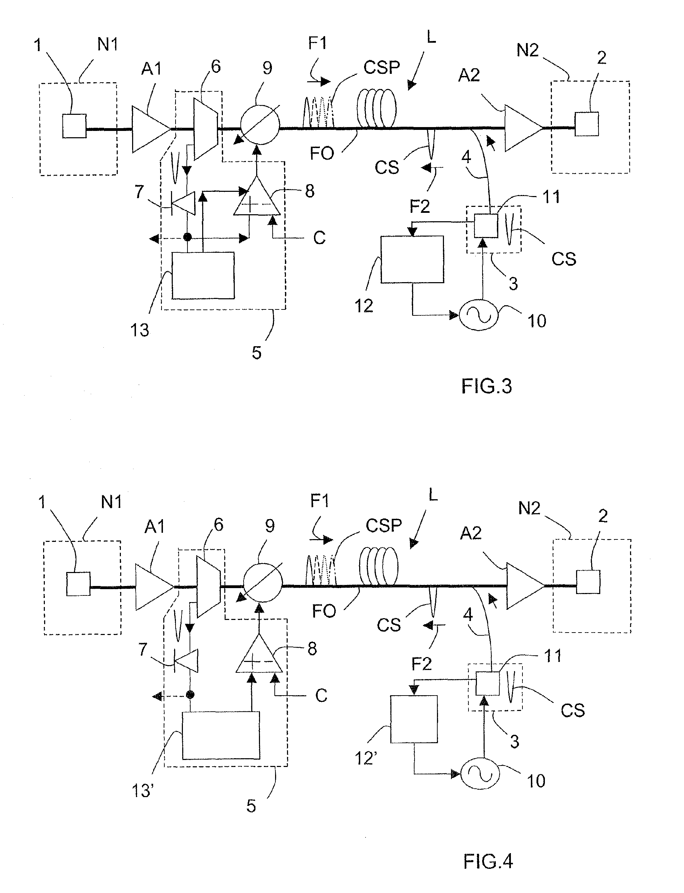

On se réfère maintenant à la figure 3 pour décrire un troisième exemple de réalisation d'un dispositif selon l'invention. Il s'agit en fait d'une variante du deuxième exemple de réalisation décrit ci-avant en référence à la figure 2.

Ce troisième exemple de réalisation reprend intégralement le dispositif du deuxième exemple, en lui adjoignant un module d'injection auxiliaire 10 et un module de détection auxiliaire 13.

Plus précisément, le module d'injection auxiliaire 10 est chargé d'appliquer une modulation d'amplitude, appelée « Tone », au canal de supervision CS émis par le module de d'émission 11 du module de supervision 3 quand la puissance de celui-ci est jugée suffisamment proche de la valeur nominale. Ce Tone, qui constitue les signaux auxiliaires, peut être une sinusoïde de faible amplitude (typiquement 5% de la puissance du canal de supervision CS) appliquée directement au module d'émission 11 du module de supervision 3, comme illustré.

Afin de déterminer si la puissance du canal de supervision CS est acceptable, elle est mesurée par un module de mesure de puissance 12 (soit en interne dans le module de supervision 3, comme illustré, soit par un coupleur placé entre le module d'émission 11 du module de supervision 3 et le dispositif d'insertion 4) et comparée à un intervalle de puissance centré sur une valeur nominale. Le Tone est alors appliqué par le module d'injection auxiliaire 10 quand la puissance mesurée du canal de supervision CS est comprise dans l'intervalle de puissance nominale. Si la puissance du canal de supervision CS est en dehors de cet intervalle (trop élevée ou trop faible) le Tone n'est pas appliqué car la mesure des pertes de la fibre FO, déduite de la puissance du canal de supervision CS détectée par le module de détection 5, serait alors erronée.

Le module de détection 5 comporte un circuit 13 de détection du Tone, couplé à la sortie du circuit électronique 7 et au comparateur 8, et chargé de déterminer si la mesure des pertes de la fibre FO peut être déclarée fiable ou non. Ainsi, quand le Tone est détecté le circuit de détection de Tone 13 active le module de contrôle 9, de sorte qu'il compense les variations de puissance détectées. En revanche, lorsque le Tone n'est pas détecté, le circuit de détection de Tone 13 désactive (ou fige) le module de contrôle 9 car la mesure des pertes de la fibre FO est déclarée non fiable.

Dans cette configuration le Tone comporte donc deux états : actif et inactif. Dans l'état actif la puissance du canal de supervision CS est comprise dans l'intervalle nominal. La mesure des pertes de la fibre FO est donc fiable et une modulation (typiquement une sinusoïdale d'une amplitude proche de 5%) est alors appliquée par le module d'injection auxiliaire 10 au canal de supervision CS. Dans l'état inactif la puissance du canal de supervision CS est en dehors de l'intervalle nominal. La mesure des pertes de la fibre FO n'étant pas fiable aucune modulation n'est ajoutée par le module d'injection auxiliaire 10 au canal de supervision CS.

Le dispositif selon l'invention est ici constitué, d'une part, d'un module de supervision 3, d'un module de mesure de puissance 12 et d'un module d'injection auxiliaire 10, placés au niveau de la seconde extrémité E2 de la fibre optique FO, et d'autre part, d'un module de détection 5, comportant un module de détection de Tone 13, et d'un module de contrôle 9, placés au niveau de la première extrémité E1 de ladite fibre optique FO.

On se réfère maintenant à la figure 4 pour décrire un quatrième exemple de réalisation d'un dispositif selon l'invention. Il s'agit en fait d'une variante du troisième exemple de réalisation décrit ci-avant en référence à la figure 3. Cette variante est destinée à permettre l'augmentation de la fiabilité du processus.

Dans cette variante, le Tone, qui constitue toujours les signaux auxiliaires, ne comporte plus deux états (actif / inactif). L'amplitude relative de sa modulation (typiquement comprise entre 1 et 10 %) est maintenant inversement proportionnelle à la puissance du canal de supervision CS, délivré par le module d'émission 11 du module de supervision 3, afin qu'à l'entrée E2 de la fibre FO l'amplitude absolue du Tone soit constante et indépendante de la puissance dudit canal de supervision CS. Le module de mesure de puissance (12) est donc ici remplacé par un module de contrôle du Tone 12' qui pilote le module d'injection auxiliaire 10.

Par conséquent, dans cette variante, le module de détection 5 se base sur l'amplitude (de modulation) du Tone appliquée au canal de supervision CS et non sur sa puissance pour évaluer les pertes de la fibre FO et ainsi piloter le module de contrôle 9.

A cet effet, le module de détection 5 comporte un circuit 13' délivrant des mesures représentatives de l'amplitude du Tone et constituant les informations primaires. La sortie du circuit électronique 7 alimente donc le circuit de mesure du Tone 13 qui alimente à son tour le comparateur 8 en informations primaires représentatives de l'amplitude du Tone qu'il peut alors comparer à la consigne C pour générer des informations secondaires destinées à piloter le module de contrôle 9 (ou VOA).

Le dispositif selon l'invention est ici constitué, d'une part, d'un module de supervision 3, d'un module de contrôle du Tone 12' et d'un module d'injection auxiliaire 10, placés au niveau de la seconde extrémité E2 de la fibre optique FO, et d'autre part, d'un module de détection 5, comportant un circuit de mesure du Tone 13', et d'un module de contrôle 9, placés au niveau de la première extrémité E1 de ladite fibre optique FO.

Il est important de noter que dans les modes de réalisation illustrés sur les figures 2 à 4, le module de détection 5 et/ou l'amplificateur A1 et/ou le module de contrôle 9 (VOA) peuvent être intégrés dans le premier noeud N1. De même, dans les modes de réalisation illustrés sur les figures 3 et 4, le module de supervision 3 et son dispositif d'insertion 4 et/ou le module d'injection auxiliaire 10 et/ou le module de mesure de puissance 12 (ou le module de contrôle du Tone 12') et/ou l'amplificateur A2 peuvent être intégrés dans le second noeud N2.

L'invention offre également un procédé dédié à la mesure dynamique de la perte de puissance dans une ligne de transmission optique L comprenant au moins une fibre optique FO.

Celui-ci peut être mis en oeuvre à l'aide du dispositif, de la ligne de transmission L et des noeuds N1 et N2 présentés ci-avant. Les fonctions et sous-fonctions principales et optionnelles assurées par les étapes de ce procédé étant sensiblement identiques à celles assurées par les différents moyens constituants le dispositif et/ou les noeuds N1 et N2, seules seront résumées ci-après les étapes mettant en oeuvre les fonctions principales du procédé selon l'invention.

Ce procédé consiste à injecter des signaux de supervision dans la fibre FO par sa seconde extrémité E2, sous une puissance optique choisie, puis à extraire les signaux de supervision au niveau de la première extrémité E1 de la fibre FO pour déterminer leur puissance optique et déduire de cette puissance et de la puissance optique choisie des informations primaires représentatives de la perte de puissance optique des signaux de supervision dans la fibre, ainsi qu'éventuellement à comparer les informations primaires à une valeur représentative d'une perte de puissance nominale dans la fibre FO, afin de délivrer des informations secondaires représentatives d'une variation de perte de puissance dans la fibre optique FO.

Le procédé peut également comporter une étape complémentaire d'ajustement (ou de régulation) dans laquelle, en cas de détection d'une variation de perte de puissance (non autorisée) introduite par la fibre FO, on modifie la puissance des signaux injectés dans la fibre FO au niveau de sa première extrémité E1, en fonction de cette variation détectée.

L'invention ne se limite pas aux modes de réalisation de dispositif et de procédé décrits ci-avant, seulement à titre d'exemple, mais elle englobe toutes les variantes que pourra envisager l'homme de l'art dans le cadre des revendications ci-après.

## Revendications

1. Dispositif optique de mesure dynamique de perte de puissance dans une ligne de transmission optique (L) comprenant au moins une fibre optique (FO) comportant une première (E1) et une seconde (E2) extrémités disposées respectivement pour recevoir d'un module d'émission (1 ) et pour délivrer à un module de réception (2) des signaux optiques primaires, **caractérisé en ce qu'**il comprend des moyens d'injection (3), propres à injecter des signaux de supervision dans ladite fibre optique (FO) au niveau de ladite seconde extrémité (E2), sous une puissance optique choisie, et des moyens de détection (5) agencés pour extraire lesdits signaux de supervision au niveau de ladite première extrémité (E1) de la fibre optique (FO) afin de déterminer leur puissance optique et déduire de cette puissance et de ladite puissance optique choisie des informations primaires représentatives de la perte de puissance optique des signaux de supervision dans la fibre optique (FO).

2. Dispositif selon la revendication 1, **caractérisé en ce que** lesdits moyens de détection (5) sont agencés pour comparer lesdites informations primaires à une valeur représentative d'une perte de puissance nominale dans la fibre optique (FO), de manière à délivrer des informations secondaires représentatives d'une variation de perte de puissance dans ladite fibre optique (FO).

3. Dispositif selon la revendication 2, **caractérisé en ce que** lesdits moyens de détection (5) sont agencés pour délivrer des informations secondaires représentatives de l'amplitude de l'écart entre lesdites informations primaires et ladite valeur.

4. Dispositif selon la revendication 3, **caractérisé en ce que** lesdits moyens de détection (5) sont agencés pour délivrer des informations secondaires représentatives de l'amplitude dudit écart.

5. Dispositif selon la revendication 3, **caractérisé en ce que** lesdits moyens de détection (5) sont agencés pour délivrer des informations secondaires à trois états, un premier état étant associé à un écart positif supérieur à un premier seuil entre lesdites informations primaires et ladite valeur, un deuxième état étant associé à un écart négatif inférieur à un second seuil entre lesdites informations primaires et ladite valeur, et un troisième état étant associé à un écart compris entre lesdits premier et second seuils.

6. Dispositif selon l'une des revendications 1 à 5, **caractérisé en ce qu'**il comprend des moyens de contrôle (9) couplés auxdits moyens de détection (5) et à ladite première extrémité (E1) de la fibre optique (FO), et agencés, en cas de détection par lesdits moyens de détection (5) d'une variation de perte de puissance des signaux de supervision dans la fibre, pour modifier la puissance des signaux primaires injectés dans la fibre optique (FO) par sa première extrémité (E1), en fonction de ladite variation de perte de puissance détectée.

7. Dispositif selon la revendication 6, **caractérisé en ce que** lesdits moyens de contrôle (9) comprennent un atténuateur optique variable couplé à ladite première extrémité (E1) de la fibre optique (FO).

8. Dispositif selon la combinaison des revendications 5 et 7, **caractérisé en ce que** lesdits moyens de contrôle (9) sont agencés pour i) réduire le niveau de leur atténuation de puissance lorsque lesdites informations secondaires sont dans leur premier état, ii) augmenter le niveau de leur atténuation de puissance lorsque lesdites informations secondaires sont dans leur deuxième état, et iii) maintenir constant le niveau de leur atténuation de puissance lorsque lesdites informations secondaires sont dans leur troisième état.

9. Dispositif selon l'une des revendications 1 à 8, **caractérisé en ce que** lesdits moyens de détection (5) comprennent un filtre optique (6), pour extraire lesdits signaux de supervision, et un circuit électronique (7), couplé audit filtre optique (6) et propre à délivrer lesdites informations primaires.

10. Dispositif selon la combinaison des revendications 2 et 9, **caractérisé en ce que** lesdits moyens de détection (5) comprennent des moyens de comparaison (8) couplés audit circuit électronique (7) et agencés pour comparer lesdites informations primaires à la valeur représentative de la perte de puissance nominale de manière à délivrer lesdites informations secondaires.

11. Dispositif selon l'une des revendications 1 à 10, **caractérisé en ce qu'**il comprend des moyens de mesure de puissance (12) propres à délivrer des mesures représentatives de la puissance desdits signaux de supervision délivrés par lesdits moyens de supervision (3), et des moyens d'injection auxiliaire (10) agencés pour appliquer des signaux auxiliaires auxdits signaux de supervision en aval de ladite seconde extrémité (E2) lorsque les signaux primaires présentent au niveau de ladite seconde extrémité (E2) de la fibre optique (FO) une puissance optique dont la valeur est incluse dans un intervalle choisi.

12. Dispositif selon la revendication 11, **caractérisé en ce que** lesdits moyens de détection (5) comprennent des moyens de détection desdits signaux auxiliaires (13) agencés en cas de détection desdits signaux auxiliaires pour permettre auxdits moyens de contrôle (9) de fonctionner compte tenu desdites informations secondaires.

13. Dispositif selon l'une des revendication 1 à 10, **caractérisé en ce qu'**il comprend des moyens d'injection auxiliaire (10) agencés pour appliquer des signaux auxiliaires auxdits signaux de supervision en aval de ladite seconde extrémité (E2), et des moyens de contrôle (12') agencés pour contrôler l'amplitude relative desdits signaux auxiliaires délivrés par lesdits moyens d'injection auxiliaire (10) de sorte i) que ladite amplitude relative présente une valeur inversement proportionnelle à la puissance des signaux de supervision délivrés par lesdits moyens de supervision (3), et ii) que lesdits signaux auxiliaires présentent une amplitude absolue sensiblement constante et indépendante de la puissance desdits signaux de supervision.

14. Dispositif selon la revendication 13, **caractérisé en ce que** lesdits moyens de détection (5) comprennent des moyens de mesure (13') agencés pour délivrer des mesures, représentatives de l'amplitude desdits signaux auxiliaires appliqués auxdits signaux de supervision, et constituant lesdites informations primaires.

15. Dispositif selon l'une des revendications 10 à 14, **caractérisé en ce que** lesdits moyens d'injection auxiliaire (10) sont agencés pour délivrer des signaux auxiliaires propres à moduler en amplitude lesdits signaux de supervision.

16. Dispositif selon l'une des revendications 1 à 15, **caractérisé en ce que** lesdits moyens de supervision (3) comprennent des moyens d'asservissement agencés pour asservir la puissance desdits signaux de supervision avant leur injection dans ladite fibre optique (FO).

17. Procédé de mesure dynamique de perte de puissance dans une ligne de transmission optique (L) comprenant au moins une fibre optique (FO) comportant une première (E1) et une seconde (E2) extrémités disposées respectivement pour recevoir d'un module d'émission (1) et pour délivrer à un module de réception (2) des signaux optiques primaires, **caractérisé en ce qu'**il consiste à injecter des signaux de supervision dans ladite fibre optique (FO) par ladite seconde extrémité (E2), sous une puissance optique choisie, puis à extraire lesdits signaux de supervision au niveau de ladite première extrémité (E1) de la fibre optique (FO) pour déterminer leur puissance optique et déduire de cette puissance et de ladite puissance optique choisie des informations primaires représentatives de la perte de puissance optique des signaux de supervision dans la fibre optique (FO).

18. Procédé selon la revendication 17, **caractérisé en ce que** l'on compare lesdites informations primaires à une valeur représentative d'une perte de puissance nominale dans la fibre optique (FO), de manière à délivrer des informations secondaires représentatives d'une variation de perte de puissance dans ladite fibre optique (FO).

19. Procédé selon la revendication 18, **caractérisé en ce que** lesdites informations secondaires sont représentatives de l'écart entre lesdites informations primaires et ladite valeur.

20. Procédé selon la revendication 19, **caractérisé en ce que** l'on délivre des informations secondaires représentatives de l'amplitude dudit écart.

21. Procédé selon la revendication 19, **caractérisé en ce que** l'on délivre des informations secondaires à trois états, un premier état étant associé à un écart positif supérieur à un premier seuil entre lesdites informations primaires et ladite valeur, un deuxième état étant associé à un écart négatif inférieur à un second seuil entre lesdites informations primaires et ladite valeur, et un troisième état étant associé à un écart compris entre lesdits premier et second seuils.

22. Procédé selon l'une des revendications 17 à 21, **caractérisé en ce qu'**en cas de détection d'une variation de perte de puissance des signaux de supervision dans la fibre optique (FO), on modifie la puissance des signaux primaires injectés dans la fibre optique (FO) par sa première extrémité (E1), en fonction de ladite variation détectée.

23. Procédé selon la combinaison des revendications 21 et 22, **caractérisé en ce que** i) lorsque lesdites informations secondaires sont dans leur premier état on réduit le niveau d'atténuation de puissance des signaux primaires, ii) lorsque lesdites informations secondaires sont dans leur deuxième état on augmente le niveau d'atténuation de puissance des signaux primaires, et iii) lorsque lesdites informations secondaires sont dans leur troisième état on maintient constant le niveau d'atténuation de puissance des signaux primaires.

24. Procédé selon l'une des revendications 17 à 23, **caractérisé en ce que** l'on mesure la puissance desdits signaux de supervision en aval de ladite seconde extrémité (E2), et on applique des signaux auxiliaires auxdits signaux de supervision en aval de ladite seconde extrémité (E2) lorsque les signaux primaires présentent au niveau de ladite seconde extrémité (E2) de la fibre optique (FO) une puissance optique dont la valeur est incluse dans un intervalle choisi.

25. Procédé selon la revendication 24, **caractérisé en ce qu'**en cas de détection, en amont de ladite première extrémité (E1) de la fibre optique (FO), desdits signaux auxiliaires on autorise une éventuelle modification de la puissance des signaux primaires, injectés dans la fibre optique (FO) par sa première extrémité (E1), en fonction desdites informations secondaires.

26. Procédé selon l'une des revendication 17 à 23, **caractérisé en ce que** l'on applique des signaux auxiliaires auxdits signaux de supervision en aval de ladite seconde extrémité (E2), en contrôlant leur amplitude relative de sorte i) qu'elle présente une valeur inversement proportionnelle à la puissance des signaux de supervision injectés au niveau de la seconde extrémité (E2), et ii) que lesdits signaux auxiliaires présentent une amplitude absolue sensiblement constante et indépendante de la puissance desdits signaux de supervision.

27. Procédé selon la revendication 26, **caractérisé en ce que** l'on mesure en amont de ladite première extrémité (E1) de la fibre optique (FO) l'amplitude desdits signaux auxiliaires appliqués auxdits signaux de supervision, lesdites mesures constituant lesdites informations primaires.

28. Procédé selon l'une des revendications 24 à 27, **caractérisé en ce que** lesdits signaux auxiliaires sont propres à moduler en amplitude lesdits signaux de supervision.

29. Procédé selon l'une des revendications 17 à 28, **caractérisé en ce que** l'on asservit la puissance desdits signaux de supervision avant de les injecter dans ladite fibre optique (FO).

30. Utilisation du dispositif et du procédé selon l'une des revendications précédentes dans le domaine des télécommunications.
